# EUROPÄISCHE PATENTSCHRIFT

(11) **EP 4 260 042 B1**
(45) Veröffentlichungstag und Bekanntmachung des Hinweises auf die Patenterteilung: **25.02.2026**
(21) Anmeldenummer: 21835182.3
(22) Anmeldetag: 02.12.2021
(51) Int. Cl.: G01M 17/02

(54) **REIFENPRÜFSTAND MIT EINER HEXAPOD-ANORDNUNG UND EINEM RIEMEN**
TIRE TEST STAND WITH A HEXAPOD ASSEMBLY AND A BELT
BANC D'ESSAI DE PNEUMATIQUES À AGENCEMENT HEXAPODE ET COURROIE

(30) Priorität: 10.12.2020 DE 102020215612
(43) Veröffentlichungstag der Anmeldung: 18.10.2023
(73) Patentinhaber: ZF Friedrichshafen AG, 88046 Friedrichshafen (DE)
(72) Erfinder: EISENBEISS, Jens, 94081 Fuerstenzell (DE); BÖSL, Roland, 94127 Neuburg am Inn (DE)
(74) Vertreter: Gehrmann, Jan Sebastian
(86) Internationale Anmeldenummer: PCT/EP2021/083943
(87) Internationale Veröffentlichungsnummer: WO 2022/122538

(56) Entgegenhaltungen:
- DE-A1- 102009 002 169
- US-B1- 6 247 348

## Beschreibung

Die vorliegende Erfindung betrifft einen Reifenprüfstand.

Reifenprüfstände sind aus dem Stand der Technik bekannt. Diese Reifenprüfstände weisen gewöhnlich einen Rahmen und einen Reifenhalter auf. An dem Reifenhalter kann ein Reifen mit einer Lauffläche um seine Drehachse drehbar angebracht werden. Wenn an dem Reifenhalter der Reifen drehbar angebracht ist, kann der Reifen relativ zu dem Rahmen in unterschiedliche Positionen bewegt werden.

Bei den aus dem Stand der Technik bekannten Reifenprüfständen ist eine Abrollflächeneinheit mit einer Abrollfläche vorgesehen, die gegenüber dem Rahmen bewegt werden kann. Die Abrollfläche der Abrollflächeneinheit kann auch als Straßenersatz bezeichnet werden und ist dafür vorgesehen, die Verhältnisse auf einer Straße angenähert nachzubilden. Die Abrollflächeneinheit kann beispielsweise durch eine drehbar gelagerte Trommel des Reifenprüfstands gebildet sein und die Abrollfläche kann durch eine umlaufende Außenfläche der Trommel gebildet sein.

Wenn der Reifen an dem Reifenhalter drehbar angebracht ist, kann der Reifen in eine Kontaktposition verbracht werden, in der die Lauffläche des Reifens und die umlaufende Außenfläche der Trommel in Kontakt sind. Wenn der Reifen und die umlaufende Außenfläche der Trommel in Kontakt sind und die umlaufende Außenfläche gegenüber dem Reifen bewegt wird, kann der Reifen auf der umlaufenden Außenfläche abrollen. Ein derartiger Reifenprüfstand ist aus der DE 10 2009 002169 A1 bekannt.

Generell ist es wünschenswert, dass mit einem Reifenprüfstand die Reaktion des Reifens auf unterschiedliche Belastungszustände des Reifens und die Fahrwerkskinematiken beim Fahren auf einer Straße besonders gut nachgebildet werden können.

Es ist daher Aufgabe der vorliegenden Erfindung, die Reaktion des Reifens auf unterschiedliche Belastungszustände des Reifens und die Fahrwerkskinematiken beim Fahren auf einer Straße besonders gut nachzubilden.

Gemäß der Erfindung wird die genannte Aufgabe durch einen Reifenprüfstand mit den Merkmalen des Patentanspruchs 1 gelöst. Der Reifenprüfstand weist einen Rahmen auf. Weiter weist der Reifenprüfstand einen Reifenhalter auf. Weiter weist der Reifenprüfstand eine Hexapod-Anordnung mit sechs Linearantriebselementen auf. Jedes der sechs Linearantriebselemente ist mit einem ersten Ende an dem Rahmen und einem zweiten Ende an dem Reifenhalter angebracht. An dem Reifenhalter kann ein Reifen mit einer Lauffläche um seine Drehachse drehbar angebracht werden. Der Reifenprüfstand weist außerdem einen Riemen auf. Weiter weist der Reifenprüfstand zwei drehbar gelagerte Umlenkrollen auf. Die Umlenkrollen sind von dem Riemen teilweise umschlungenen, sodass der Riemen zwischen den Umlenkrollen einen ebenen Riemenabschnitt bildet. Dann, wenn an dem Reifenhalter der Reifen drehbar angebracht ist, kann der Reifen durch Einstellen der Linearantriebselemente der Hexapod-Anordnung in eine Kontaktposition verbracht werden. In der Kontaktposition sind die Lauffläche des Reifens und der ebene Riemenabschnitt in Kontakt. Weiter rollt dann, wenn der Reifen und der ebene Riemenabschnitt in Kontakt sind und der Riemen gegenüber dem Reifen bewegt wird, der Reifen auf dem ebenen Riemenabschnitt ab. Der Reifenprüfstand weist eine Reifenantriebseinheit auf, die dann, wenn an dem Reifenhalter der Reifen drehbar angebracht ist, diesen in einer Reifenumlaufrichtung antreiben kann.

Der Reifenprüfstand weist den Rahmen auf. An dem Rahmen können verschiedene Komponenten des Reifenprüfstands angebracht sein, wie beispielsweise das erste Ende jedes der sechs Linearantriebselemente. Weitere Komponenten des Reifenprüfstands, die an dem Rahmen angebracht sein können sind die zwei drehbar gelagerten Umlenkrollen. Weiter kann ein Bedienelement zum Bedienen des Reifenprüfstands durch einen Bediener des Reifenprüfstands an dem Rahmen des Reifenprüfstands als Komponente der verschiedenen Komponenten angebracht sein.

Weiter weist der Reifenprüfstand den Reifenhalter auf. An dem Reifenhalter kann ein Reifen um seine Drehachse drehbar angebracht werden.

Weiter weist der Reifenprüfstand die Hexapod-Anordnung mit den sechs Linearantriebselementen auf. Insbesondere kann jedes Linearantriebselement der sechs Linearantriebselemente in seiner Länge eingestellt werden. Die Hexapod-Anordnung kann als Parallelkinematik bezeichnet werden. Ein Vorteil der Hexapod-Anordnung ist es, dass sie im Vergleich zu herkömmlichen Verstelleinheiten, die als Seriellkinematik ausgebildet sind, bei vergleichsweise geringem Platzbedarf eine hohe Steifigkeit aufweisen können. Weiter bietet die Hexapod-Anordnung den Vorteil, dass sie im Vergleich zu herkömmlichen Verstelleinheiten, die als Seriellkinematik ausgebildet sind, hohe Stellgenauigkeiten aufweist. Insbesondere kann mithilfe der Hexapod-Anordnung der Reifen mit einer hohen Präzision im Vergleich zu herkömmlichen Verstelleinheiten, die als Seriellkinematik ausgebildet sind, in unterschiedliche Positionen verbracht werden, wie beispielsweise der Kontaktposition. Im Zusammenhang mit der vorliegenden Erfindung hat es sich überraschend herausgestellt, dass die Hexapod-Anordnung, insbesondere in Kombination mit dem ebenen Riemenabschnitt, die realen Fahrwerkskinematiken eines Fahrzeugs in einer Prüfumgebung besser als die aus dem Stand der Technik bekannten Reifenprüfstände nachbilden kann.

Jedes der sechs Linearantriebselemente ist mit einem ersten Ende an dem Rahmen und einem zweiten Ende an dem Reifenhalter angebracht. Die sechs Linearantriebselemente können als parallel zueinander zwischen dem Rahmen und dem Reifenhalter wirkend bezeichnet werden, sodass die Hexapod-Anordnung als Parallelkinematik bezeichnet werden kann. Insbesondere kann durch Einstellen der Linearantriebselemente der Reifenhalter relativ zum Rahmen bewegt werden und in unterschiedliche Positionen verbracht werden. Bevorzugt ist jedes Linearantriebselement der sechs Linearantriebselemente mit dem ersten Ende schwenkbar an dem Rahmen und mit dem zweiten Ende schwenkbar an dem Reifenhalter angebracht, sodass jedes Linearantriebselement durch Einstellen der Linearantriebselemente und Verschwenken gegenüber dem Rahmen und dem Reifenhalter unterschiedliche Orientierungen einnehmen kann.

An dem Reifenhalter kann der Reifen mit der Lauffläche um seine Drehachse drehbar angebracht werden. An dem Reifenhalter kann also ein Reifen angebracht sein oder kein Reifen angebracht sein. Insbesondere dadurch, dass durch Einstellen der Linearantriebselemente der Reifenhalter relativ zum Rahmen bewegt werden kann und in unterschiedliche Positionen verbracht werden kann, kann ein an dem Reifenhalter angebrachter Reifen durch Einstellen der Linearantriebselemente relativ zum Rahmen bewegt werden und in unterschiedliche Positionen verbracht werden.

Der Reifenprüfstand weist außerdem den Riemen auf. Der Riemen kann auch als Endlosband oder Gurt bezeichnet werden. Bevorzugt ist der Riemen zur Übertragung von Zugkraft ausgebildet. Insbesondere ist der Riemen in seiner Längsrichtung geschlossen, sodass die in Längsrichtung des Riemens angeordneten Enden des Riemens miteinander verbunden sind oder ineinander übergehen.

Weiter weist der Reifenprüfstand die zwei drehbar gelagerten Umlenkrollen auf. Die zwei Umlenkrollen können an dem Rahmen drehbar gelagert sein.

Die Umlenkrollen sind von dem Riemen teilweise umschlungenen, sodass der Riemen zwischen den Umlenkrollen einen ebenen Riemenabschnitt bildet. Der Riemen kann ein erstes Trum und ein zweites Trum bilden. Das erste Trum kann als Arbeitsrum bezeichnet werden und kann sich von einer ersten Umlenkrolle der Umlenkrollen zu einer zweiten Umlenkrolle der Umlenkrollen erstrecken. Das zweite Trum kann als Leertrum bezeichnet werden und kann sich von der ersten Umlenkrolle der Umlenkrollen zu der zweiten Umlenkrolle der Umlenkrollen erstrecken. Der ebene Riemenabschnitt kann einen Abschnitt des ersten Trums bilden. Der Riemen kann im Bereich des ersten Trums eine geradlinige Bewegung in einer Riemenumlaufrichtung durchführen, sodass der ebene Riemenabschnitt gebildet ist. Der ebene Riemenabschnitt ist eben. Bevorzugt erstreckt sich der ebene Riemenabschnitt entlang einer Tangentialebene an dem Riemen, in der ein Kontaktpunkt zwischen der Lauffläche und dem ebenen Riemenabschnitt liegt, wenn an dem Reifenhalter der Reifen drehbar angebracht ist und die Lauffläche des Reifens und der ebene Riemenabschnitt in Kontakt sind. Die Ebenheit des Riemenabschnitts gewährleistet, dass der Reifen auf einer ebenen Abrollfläche abrollen kann. Eine durch den ebenen Riemenabschnitt gebildete ebene Abrollfläche ist insbesondere im Vergleich zu einer durch eine umlaufende Außenfläche der Trommel gekrümmt ausgebildete Abrollfläche vorteilhaft, da der ebene Riemenabschnitt eine reale Straße, insbesondere ihre eben Form, besser als aus dem Stand der Technik bekannte Reifenprüfstände nachbilden kann, insbesondere solche mit einer Abrollfläche, die durch eine umlaufende Außenfläche einer Trommel gebildet ist. Insbesondere hat sich herausgestellt, dass der Rollwiderstand des Reifens beim Abrollen auf dem ebenen Riemenabschnitt im vergleich zu einer gekrümmten Abrollfläche deutlich reduziert werden konnte. Weiter bietet die Kombination aus Riemen und Umlenkrollen eine platzsparende Bereitstellung einer Abrollfläche im Vergleich zu einer Abrollfläche auf einer zur Reduzierung der Krümmung groß dimensionierten Trommel.

Dann, wenn an dem Reifenhalter der Reifen drehbar angebracht ist, kann der Reifen durch Einstellen der Linearantriebselemente der Hexapod-Anordnung in eine Kontaktposition verbracht werden. Wie bereits beschrieben kann, insbesondere dadurch, dass durch Einstellen der Linearantriebselemente der Reifenhalter relativ zum Rahmen bewegt werden und in unterschiedliche Positionen verbracht werden kann, ein an dem Reifenhalter angebrachter Reifen durch Einstellen der Linearantriebselemente relativ zum Rahmen bewegt werden und in unterschiedliche Positionen verbracht werden. Insbesondere kann der Reifen durch Einstellen der Linearantriebselemente der Hexapod-Anordnung in die Kontaktposition verbracht werden. In der Kontaktposition sind die Lauffläche des Reifens und der ebene Riemenabschnitt in Kontakt. Bevorzugt kann der Reifen durch Einstellen der Linearantriebselemente der Hexapod-Anordnung neben der Kontaktposition in weitere Kontaktpositionen verbracht werden, sodass beispielsweise ein Sturz des Reifens, ein Schräglauf des Reifens, eine Reifenlast des Reifens, insbesondere senkrecht zur Tangentialebene an dem Riemen, in der der Kontaktpunkt zwischen der Lauffläche und dem ebenen Riemenabschnitt liegt, und/oder die Position des Reifens relativ zu dem ebenen Riemenabschnitt, insbesondere parallel zur Tangentialebene an dem Riemen, in der der Kontaktpunkt zwischen der Lauffläche und dem ebenen Riemenabschnitt liegt, und senkrecht zur Riemenumlaufrichtung im Bereich des ebenen Riemenabschnitts und/oder parallel zur Riemenumlaufrichtung im Bereich des ebenen Riemenabschnitts, eingestellt werden kann.

Weiter rollt dann, wenn der Reifen und der ebene Riemenabschnitt in Kontakt sind und der Riemen gegenüber dem Reifen bewegt wird, der Reifen auf dem ebenen Riemenabschnitt ab. Bevorzugt bildet der ebene Riemenabschnitt eine ebenen Abrollfläche, auf der der Reifen abrollen kann. Wie bereits beschrieben, kann der Reifen durch Einstellen der Linearantriebselemente der Hexapod-Anordnung neben der Kontaktposition in weitere Kontaktpositionen verbracht werden. Rollt nun der Reifen auf dem ebenen Riemenabschnitt ab, kann der Reifen in unterschiedliche Belastungszustände beim Abrollen verbracht werden. Beispielsweise kann beim Abrollen des Reifens auf dem ebenen Riemenabschnitt der Sturz des Reifens, der Schräglauf des Reifens, die Reifenlast des Reifens, insbesondere senkrecht zur Tangentialebene an dem Riemen, in der der Kontaktpunkt zwischen der Lauffläche und dem ebenen Riemenabschnitt liegt, und/oder die Position des Reifens relativ zu dem ebenen Riemenabschnitt, insbesondere parallel zur Tangentialebene an dem Riemen, in der der Kontaktpunkt zwischen der Lauffläche und dem ebenen Riemenabschnitt liegt, und senkrecht zur Riemenumlaufrichtung im Bereich des ebenen Riemenabschnitts und/oder parallel zur Riemenumlaufrichtung im Bereich des ebenen Riemenabschnitts, eingestellt werden.

Im Zusammenhang mit Reifenprüfständen hat sich ergeben, dass ein Fachmann von der Verwendung einer ebenen Abrollfläche aus technischer Sicht Abstand nehmen würde, da er beispielsweise keinen Riemen verwenden würde, da die durch die unterschiedlichen Belastungszustände des Reifens auf den Riemen wirkenden Kräfte äußerst komplex sind und beispielsweise beim Bewegen des Riemens dieser insbesondere aufgrund von Kräften, die senkrecht zur Riemenumlaufrichtung wirken, von den Umlenkrollen abzufädeln droht, solange keine technisch komplexen und kostenintensiven Vorkehrungen getroffen werden. Daher beziehen sich die aus dem Stand der Technik bekannten Reifenprüfstände auf Trommeln mit gekrümmten Abrollflächen. Im Zusammenhang mit der vorliegenden Erfindung hat sich jedoch ergeben, dass die Kombination von Hexapod-Anordnung und ebenem Riemenabschnitt die erhöhte technische Komplexität und erhöhten Kosten rechtfertigt, da diese Kombination überraschenderweise die realen Fahrwerkskinematiken beim Fahren auf einer Straße besonders gut nachbilden kann.

Weiter hat sich im Zusammenhang mit Reifenprüfständen ergeben, dass ein Fachmann von der Verwendung einer Hexapod-Anordnung aus technischer Sicht Abstand nehmen würde, da die aus dem Stand der Technik bekannten Hexapod-Anordnungen beispielsweise durch ihren symmetrischen Aufbau geringe Steifigkeiten in Richtungen aufweisen, die für das Prüfen von Reifen, die beim Abrollen in unterschiedliche Belastungszustände verbracht werden, nachteilig sind, sodass beim Messen der Reaktionskräfte des Reifens als Reaktion auf die unterschiedlichen Belastungszustände des Reifens die geringe Steifigkeit und die unvorteilhafte Verformung der Hexapod-Anordnung berücksichtigt und beispielsweise herausgerechnet werden muss. Beispielsweise ist es durch den symmetrischen Aufbau der aus dem Stand der Technik bekannten Hexapod-Anordnungen nicht möglich, die Linearantriebselemente so anzuordnen, dass zumindest drei Linearantriebselemente der sechs Linearantriebselemente so angeordnet sind, dass dann, wenn ein erstes Linearantriebselement der drei Linearantriebselemente eine Kraft auf den Reifen ausübt, die größte Kraftkomponente dieser Kraft in Richtung der ersten Raumrichtung der drei Raumrichtungen orientiert ist, dass dann, wenn ein zweites Linearantriebselement der drei Linearantriebselemente eine Kraft auf den Reifen ausübt, die größte Kraftkomponente dieser Kraft in Richtung der zweiten Raumrichtung der drei Raumrichtungen orientiert ist, und dass dann, wenn ein drittes Linearantriebselement der drei Linearantriebselemente eine Kraft auf den Reifen ausübt, die größte Kraftkomponente dieser Kraft in Richtung der dritten Raumrichtung der drei Raumrichtungen orientiert ist. Daher beziehen sich die aus dem Stand der Technik bekannten Reifenprüfstände auf Seriellkinematiken, bei denen die Kraftausübungsrichtungen auf den Reifen in allen drei Raumrichtungen durch vergleichsweise einfache technische Mittel bei vergleichsweise geringen Kosten realisierbar sind. Im Zusammenhang mit der vorliegenden Erfindung hat sich jedoch ergeben, dass die Kombination von Hexapod-Anordnung und ebenem Riemenabschnitt die erhöhte technische Komplexität und erhöhten Kosten rechtfertigt, da diese Kombination überraschenderweise die realen Fahrwerkskinematiken beim Fahren auf einer Straße besonders gut nachbilden kann.

Im Zusammenhang mit der Vorliegenden Erfindung hat sich beim Messen der Reaktionskräfte des Reifens als Reaktion auf die unterschiedlichen Belastungszustände des Reifens überraschend herausgestellt, dass bei einem Abrollen des Reifens auf dem ebenen Riemenabschnitt bei der Verwendung einer Hexapod-Anordnung die Reaktion des Reifens auf die unterschiedlichen Belastungszustände durch die Hexapod-Anordnung und den ebenen Riemenabschnitt einer Reaktion eines Reifens bei seiner Verwendung auf einer realen Straße besser entspricht, als dies bei aus dem Stand der Technik bekannten Reifenprüfständen der Fall ist. Insbesondere hat sich herausgestellt, dass durch die Kombination der Hexapod-Anordnung und dem ebenen Riemenabschnitt die realen Fahrwerkskinematiken beim Fahren auf einer Straße besonders gut nachgebildet werden können.

Zusammenfassend kann also festgestellt werden, dass der Reifenprüfstand die Reaktion des Reifens auf unterschiedliche Belastungszustände des Reifens und die Fahrwerkskinematiken beim Fahren auf einer Straße besonders gut nachbilden kann.

In einer Ausführungsform ist wenigstens eines der Linearantriebselemente der Hexapod-Anordnung als Hydraulikzylinder ausgebildet. Die Ausbildung wenigstens eines der Linearantriebselemente der Hexapod-Anordnung als Hydraulikzylinder gewährleistet, dass vergleichsweise hohe Kräfte übertragen werden können. Weiter gewährleistet die Ausbildung wenigstens eines der Linearantriebselemente der Hexapod-Anordnung als Hydraulikzylinder gleichförmige und exakte Einstellbewegungen. Insbesondere kann durch die Ausbildung wenigstens eines der Linearantriebselemente der Hexapod-Anordnung als Hydraulikzylinder die Stellgenauigkeit der Hexapod-Anordnung erhöht werden. Besonders bevorzugt ist jedes der Linearantriebselemente der Hexapod-Anordnung als Hydraulikzylinder ausgebildet. Die für das wenigstens eine Linearantriebselement genannten Vorteile gelten entsprechend für jedes der Linearantriebselemente.

In einer Ausführungsform ist wenigstens eines der Linearantriebselemente der Hexapod-Anordnung als elektromechanischer Linearantrieb ausgebildet. Die Ausbildung wenigstens eines der Linearantriebselemente der Hexapod-Anordnung als elektromechanischer Linearantrieb gewährleistet vergleichsweise hohe Einstellgeschwindigkeiten und hohe Einstellbeschleunigungen zum Einstellen der Linearantriebselemente. Weiter gewährleistet die Ausbildung wenigstens eines der Linearantriebselemente der Hexapod-Anordnung als elektromechanischer Linearantrieb gleichförmige und exakte Einstellbewegungen. Insbesondere kann durch die Ausbildung wenigstens eines der Linearantriebselemente der Hexapod-Anordnung als elektromechanischer Linearantrieb die Stellgenauigkeit der Hexapod-Anordnung erhöht werden. Besonders bevorzugt ist jedes der Linearantriebselemente der Hexapod-Anordnung als elektromechanischer Linearantrieb ausgebildet. Die für das wenigstens eine Linearantriebselement genannten Vorteile gelten entsprechend für jedes der Linearantriebselemente.

Der Reifenprüfstand weist eine Reifenantriebseinheit auf, die dann, wenn an dem Reifenhalter der Reifen drehbar angebracht ist, diesen in einer Reifenumlaufrichtung antreiben kann. Mithilfe der Reifenantriebseinheit kann der Reifen in Reifenumlaufrichtung angetrieben werden und so in eine Drehbewegung um seine Drehachse versetzt werden. Weiter kann mithilfe der Reifenantriebseinheit der Reifen beim Abrollen auf dem ebenen Riemenabschnitt in Reifenumlaufrichtung beschleunigt werden, sodass der Reifen in einen weiteren Belastungszustand verbracht werden kann. Für den Fall, dass der Reifenprüfstand keine Riemenantriebseinheit aufweist, kann durch Antreiben des Reifens in der Reifenumlaufrichtung und Kontakt zwischen der Lauffläche und dem ebenen Riemenabschnitt der Riemen in der Riemenumlaufrichtung angetrieben werden.

In einer Ausführungsform weist der Reifenprüfstand eine Reifenabbremseinheit auf, die dann, wenn an dem Reifenhalter der Reifen drehbar angebracht ist, diesen in einer Reifenumlaufrichtung abbremsen kann. Mithilfe der Reifenabbremseinheit kann der Reifen in Reifenumlaufrichtung abgebremst werden und so die Drehbewegung um seine Drehachse verlangsamt werden. Die Drehgeschwindigkeit des Reifens kann mithilfe der Reifenabbremseinheit in der Reifenumlaufrichtung verringert werden. Weiter kann mithilfe der Reifenabbremseinheit der Reifen beim Abrollen auf dem ebenen Riemenabschnitt in Reifenumlaufrichtung abgebremst werden, sodass der Reifen in einen weiteren Belastungszustand verbracht werden kann.

In einer Ausführungsform weist der Reifenprüfstand eine Riemenantriebseinheit auf, die den Riemen in einer Riemenumlaufrichtung antreiben kann. Mithilfe der Riemenantriebseinheit kann der Riemen in der Riemenumlaufrichtung angetrieben werden. Für den Fall, dass der Reifenprüfstand keine Reifenantriebseinheit aufweist, kann durch Antreiben des Riemens in der Riemenumlaufrichtung und Kontakt zwischen der Lauffläche und dem ebenen Riemenabschnitt der Reifen in der Reifenumlaufrichtung angetrieben werden.

In einer Ausführungsform ist die Riemenantriebseinheit mit einer Umlenkrolle der Umlenkrollen gekoppelt, um den Riemen über diese Umlenkrolle in der Riemenumlaufrichtung anzutreiben. Die Kopplung der Riemenantriebseinheit mit einer Umlenkrolle der Umlenkrollen, um den Riemen über diese Umlenkrolle in der Riemenumlaufrichtung anzutreiben, stellt einen technisch einfachen und kostengünstigen Antrieb des Riemens bereit, da auf zusätzliche Komponenten zur Kopplung der Riemenantriebseinheit mit dem Riemen verzichtet werden kann. Bevorzugt ist die Riemenantriebseinheit mit zwei Umlenkrollen der Umlenkrollen gekoppelt, um den Riemen über diese Umlenkrollen in der Riemenumlaufrichtung anzutreiben. Eine Kopplung der Riemenantriebseinheit mit zwei Umlenkrollen der Umlenkrollen, um den Riemen über diese Umlenkrollen in der Riemenumlaufrichtung anzutreiben, gewährleistet, dass die Krafteinleitung in den Riemen, um diesen anzutreiben an mehreren Stellen vorgesehen ist und somit die mechanische Belastung des Riemens reduziert werden kann.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.

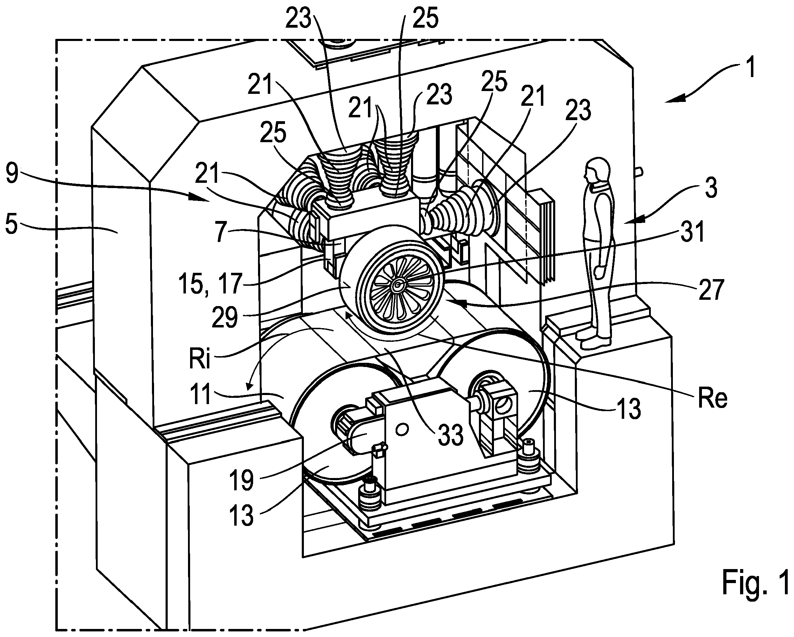

- Figur 1: zeigt eine schematische Ansicht einer Ausführungsform eines erfindungsgemäßen Reifenprüfstands.

In Figur 1 ist eine schematische Ansicht einer Ausführungsform eines erfindungsgemäßen Reifenprüfstands 1 dargestellt. Weiter Zeigt Figur 1 einen Bediener 3 des Reifenprüfstands 1.

Der Reifenprüfstand 1 weist einen Rahmen 5, einen Reifenhalter 7, eine Hexapod-Anordnung 9, einen Riemen 11 und zwei Umlenkrollen 13 auf. Weiter weist der Reifenprüfstand 1 eine Reifenantriebseinheit 15, eine Reifenabbremseinheit 17 und eine Riemenantriebseinheit 19 auf.

Die Hexapod-Anordnung 9 weist sechs Linearantriebselemente 21 auf. Jedes der sechs Linearantriebselemente 21 weist ein erstes Ende 23 und ein zweites Ende 25 auf. Jedes der sechs Linearantriebselemente 21 ist mit dem ersten Ende 23 an dem Rahmen 5 und mit dem zweiten Ende 25 an dem Reifenhalter 7 angebracht. Ein Abschnitt des Rahmens 5 erstreckt sich in den hinteren Teil der Figur 1 und ist von dem in Figur 1 sichtbar dargestellten Abschnitt des Rahmens 5 verdeckt. Drei der sechs Linearantriebselemente 21 sind mit dem ersten Ende 23 an dem in Figur 1 sichtbar dargestellten Abschnitt des Rahmens 5 angebracht. Weitere drei der sechs Linearantriebselemente 21 sind mit dem ersten Ende 23 an dem in Figur 1 verdeckten Abschnitt des Rahmens 5 angebracht. Jedes der sechs Linearantriebselemente 21 ist von einem Faltenbalg ummantelt, um das Linearantriebselement 21 vor Verschmutzungen zu schützen. In der in Figur 1 dargestellten Ausführungsform des erfindungsgemäßen Reifenprüfstands 1 ist jedes der sechs Linearantriebselemente 21 der Hexapod-Anordnung 9 als elektromechanischer Linearantrieb ausgebildet. Alternativ kann durch Umrüsten auch jedes der sechs Linearantriebselemente 21 der Hexapod-Anordnung 9 als Hydraulikzylinder ausgebildet sein.

Weiter ist in Figur 1 ein Reifen 27 mit einer Lauffläche 29 dargestellt. Der Reifen 27 ist um seine Drehachse 31 drehbar an dem Reifenhalter 7 angebracht. Die Reifenantriebseinheit 15 kann den an dem Reifenhalter 7 drehbar angebrachten Reifen 27 in einer Reifenumlaufrichtung Re antreiben. Die Reifenabbremseinheit 17 kann den an dem Reifenhalter 7 drehbar angebrachten Reifen 27 in der Reifenumlaufrichtung Re abbremsen, d.h., die Drehgeschwindigkeit des Reifens 27 in der Reifenumlaufrichtung Re verringern.

Wie bereits erwähnt, weist der Reifenprüfstand 1 den Riemen 11 und die zwei Umlenkrollen 13 auf. Die zwei Umlenkrollen 13 sind drehbar gelagert. Die Umlenkrollen 13 sind von dem Riemen 11 teilweise umschlungen, sodass der Riemen 11 zwischen den Umlenkrollen 13 einen ebenen Riemenabschnitt 33 bildet. Der an dem Reifenhalter 7 drehbar angebrachte Reifen 27 kann durch Einstellen der Linearantriebselemente 21 der Hexapod-Anordnung 9 in eine Kontaktposition verbracht werden, die in Figur 1 dargestellt ist und in der die Lauffläche 29 des Reifens 27 und der ebene Riemenabschnitt 33 in Kontakt sind.

Wie bereits beschrieben, weist der Reifenprüfstand 1 die Riemenantriebseinheit 19 auf. Die Riemenantriebseinheit 19 kann den Riemen 11 in einer Riemenumlaufrichtung Ri antreiben. In der in Figur 1 dargestellten Ausführungsform des erfindungsgemäßen Reifenprüfstands 1 ist die Riemenantriebseinheit 19 mit der in Figur 1 links dargestellten Umlenkrolle 13 der Umlenkrollen 13 gekoppelt, um den Riemen 11 über diese Umlenkrolle 13 in der Riemenumlaufrichtung Ri anzutreiben. Wenn nun der Reifen 27 und der ebene Riemenabschnitt 33 in Kontakt sind und der Riemen 11 gegenüber dem Reifen 27 bewegt wird, rollt der Reifen 27 auf dem ebenen Riemenabschnitt 33 ab.

In dem in Figur 1 dargestellten Ausführungsbeispiel kann der Reifen 27 in Bezug zu dem ebenen Riemenabschnitt 33 mithilfe der Hexapod-Anordnung 9 positioniert werden. Insbesondere kann der Reifen 27 durch Einstellen der Linearantriebselemente 21 der Hexapod-Anordnung 9 in die Kontaktposition verbracht werden, in der die Lauffläche 29 des Reifens 27 mit dem ebenen Riemenabschnitt 33 in Kontakt ist. Weiter kann der Reifen 27 durch Einstellen der Linearantriebselemente 21 der Hexapod-Anordnung 9 neben der Kontaktposition in weitere Kontaktpositionen verbracht werden kann, in der die Lauffläche 29 des Reifens 27 ebenfalls mit dem ebenen Riemenabschnitt 33 in Kontakt ist. Rollt nun der Reifen 27 auf dem ebenen Riemenabschnitt 33 ab, wird der Reifen 27 beim Abrollen in unterschiedliche Belastungszustände verbracht. Durch Einstellen der Linearantriebselemente 21 beim Abrollen des Reifens 27 auf dem ebenen Riemenabschnitt 33 kann der Sturz des Reifens 27, der Schräglauf des Reifens 27, die Reifenlast des Reifens 27, und/oder die Position des Reifens 27 relativ zu dem ebenen Riemenabschnitt 33 eingestellt werden. Außerdem kann mithilfe der Reifenantriebseinheit 15 der Reifen 27 in der Reifenumlaufrichtung Re angetrieben werden oder mithilfe der Reifenabbremseinheit 17 in der Reifenumlaufrichtung Re abgebremst werden. Hierdurch kann der Reifen 27 beim Abrollen in unterschiedliche Belastungszustände verbracht werden.

Im Zusammenhang mit der Vorliegenden Erfindung hat sich beim Messen der Reaktionskräfte des Reifens 27 als Reaktion auf die unterschiedlichen Belastungszustände des Reifens 27 überraschend herausgestellt, dass bei einem Abrollen des Reifens 27 auf dem ebenen Riemenabschnitt 33 bei der Verwendung der Hexapod-Anordnung 9 die Reaktion des Reifens 27 auf die unterschiedlichen Belastungszustände durch die Hexapod-Anordnung 9 und den ebenen Riemenabschnitt 33 einer Reaktion eines Reifens bei seiner Verwendung auf einer realen Straße besser entspricht, als dies bei aus dem Stand der Technik bekannten Reifenprüfständen der Fall ist. Insbesondere hat sich herausgestellt, dass durch die Kombination der Hexapod-Anordnung 9 und dem ebenen Riemenabschnitt 33 die realen Fahrwerkskinematiken beim Fahren auf einer Straße besonders gut nachgebildet werden können.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichen

- 1: Reifenprüfstand
- 3: Bediener
- 5: Rahmen
- 7: Reifenhalter
- 9: Hexapod-Anordnung
- 11: Riemen
- 13: Umlenkrolle
- 15: Reifenantriebseinheit
- 17: Reifenabbremseinheit
- 19: Riemenantriebseinheit
- 21: Linearantriebselement
- 23: ersten Ende eines Linearantriebselements
- 25: zweites Ende eines Linearantriebselements
- 27: Reifen
- 29: Lauffläche
- 31: Drehachse
- 33: ebener Riemenabschnitt
- Re: Reifenumlaufrichtung
- Ri: Riemenumlaufrichtung

## Patentansprüche

1. Reifenprüfstand (1)
mit einem Rahmen (5),
mit einem Reifenhalter (7),
mit einer Hexapod-Anordnung (9) mit sechs Linearantriebselementen (21), wobei jedes der sechs Linearantriebselemente (21) mit einem ersten Ende (23) an dem Rahmen (5) und einem zweiten Ende (25) an dem Reifenhalter (7) angebracht ist,
wobei an dem Reifenhalter (7) ein Reifen (27) mit einer Lauffläche (29) um seine Drehachse (31) drehbar angebracht werden kann,
mit einem Riemen (11) und
mit zwei drehbar gelagerten Umlenkrollen (13), wobei die Umlenkrollen (13) von dem Riemen (11) teilweise umschlungen sind, sodass der Riemen (11) zwischen den Umlenkrollen (13) einen ebenen Riemenabschnitt (33) bildet,
wobei dann, wenn an dem Reifenhalter (7) der Reifen (27) drehbar angebracht ist, der Reifen (27) durch Einstellen der Linearantriebselemente (21) der Hexapod-Anordnung (9) in eine Kontaktposition verbracht werden kann, in der die Lauffläche (29) des Reifens (27) und der ebene Riemenabschnitt (33) in Kontakt sind,
wobei dann, wenn der Reifen (27) und der ebene Riemenabschnitt (33) in Kontakt sind und der Riemen (11) gegenüber dem Reifen (27) bewegt wird, der Reifen (27) auf dem ebenen Riemenabschnitt (33) abrollt, und
wobei der Reifenprüfstand (1) eine Reifenantriebseinheit (15) aufweist, die dann, wenn an dem Reifenhalter (7) der Reifen (27) drehbar angebracht ist, diesen in einer Reifenumlaufrichtung (Re) antreiben kann.

2. Reifenprüfstand (1) nach dem vorhergehenden Anspruch, wobei wenigstens eines der Linearantriebselemente (21) der Hexapod-Anordnung (9) als Hydraulikzylinder ausgebildet ist.

3. Reifenprüfstand (1) nach Anspruch 1, wobei wenigstens eines der Linearantriebselemente (21) der Hexapod-Anordnung (9) als elektromechanischer Linearantrieb ausgebildet ist.

4. Reifenprüfstand (1) nach einem der vorhergehenden Ansprüche, wobei der Reifenprüfstand eine Reifenabbremseinheit (17) aufweist, die dann, wenn an dem Reifenhalter (7) der Reifen (27) drehbar angebracht ist, diesen in einer Reifenumlaufrichtung (Re) abbremsen kann.

5. Reifenprüfstand (1) nach einem der vorhergehenden Ansprüche, wobei der Reifenprüfstand (1) eine Riemenantriebseinheit (19) aufweist, die den Riemen (11) in einer Riemenumlaufrichtung (Ri) antreiben kann.

6. Reifenprüfstand (1) nach Anspruch 5, wobei die Riemenantriebseinheit (19) mit einer Umlenkrolle (13) der Umlenkrollen (13) gekoppelt ist, um den Riemen (11) über diese Umlenkrolle (13) in der Riemenumlaufrichtung anzutreiben.

## Claims

1. Tire test stand (1)
with a frame (5),
with a tire holder (7),
with a hexapod assembly (9) with six linear drive elements (21), each of the six linear drive elements (21) being attached at a first end (23) to the frame (5) and at a second end (25) to the tire holder (7),
wherein a tire (27) with a tread (29) can be attached to the tire holder (7) so as to be rotatable about its axis of rotation (31),
with a belt (11), and
with two rotatably mounted deflection pulleys (13), the deflection pulleys (13) being partially looped around by the belt (11) such that the belt (11) forms a flat belt portion (33) between the deflection pulleys (13),
wherein when the tire (27) is rotatably attached to the tire holder (7), the tire (27) can be brought by adjustment of the linear drive elements (21) of the hexapod assembly (9) into a contact position in which the tread (29) of the tire (27) and the flat belt portion (33) are in contact,
wherein when the tire (27) and the flat belt portion (33) are in contact and the belt (11) is moved in relation to the tire (27), the tire (27) rolls on the flat belt portion (33), and
wherein the tire test stand (1) has a tire drive unit (15) which, when the tire (27) is rotatably attached to the tire holder (7), can drive said tire in a tire revolving direction (Re).

2. Tire test stand (1) according to the preceding claim, wherein at least one of the linear drive elements (21) of the hexapod assembly (9) is designed as a hydraulic cylinder.

3. Tire test stand (1) according to Claim 1, wherein at least one of the linear drive elements (21) of the hexapod assembly (9) is designed as an electromechanical linear drive.

4. Tire test stand (1) according to one of the preceding claims, wherein the tire test stand has a tire braking unit (17) which, when the tire (27) is rotatably attached to the tire holder (7), can brake said tire in a tire revolving direction (Re).

5. Tire test stand (1) according to one of the preceding claims, wherein the tire test stand (1) has a belt drive unit (19) which can drive the belt (11) in a belt revolving direction (Ri).

6. Tire test stand (1) according to Claim 5, wherein the belt drive unit (19) is coupled to one deflection pulley (13) of the deflection pulleys (13) in order to drive the belt (11) in the belt revolving direction via said deflection pulley (13).

## Revendications

1. Banc d'essai de pneus (1)
avec un cadre (5),
avec un porte-pneu (7),
avec un ensemble hexapode (9) avec six éléments d'entraînement linéaire (21), chacun des six éléments d'entraînement linéaire (21) étant installé par une première extrémité (23) sur le cadre (5) et par une seconde extrémité (25) sur le porte-pneu (7),
un pneu (27) avec une surface de roulement (29) autour de son axe de rotation (31) pouvant être installé de manière rotative sur le porte-pneu (7),
avec une courroie (11) et
avec deux galets de renvoi (13) montés de manière rotative, les galets de renvoi (13) étant en partie entourés par la courroie (11), si bien que la courroie (11) forme une section de courroie plane (33) entre les galets de renvoi (13),
le pneu (27) pouvant être amené dans une position de contact, dans laquelle la surface de roulement (29) du pneu (27) et une section de courroie plane (33) sont en contact, en réglant les éléments d'entraînement linéaire (21) de l'ensemble hexapode (9) lorsque le pneu (27) est installé de manière rotative sur le porte-pneu (7),
le pneu (27) roulant sur la section de courroie plane (33) lorsque le pneu (27) et la section de courroie plane (33) sont en contact et que la courroie (11) est déplacée par rapport au pneu (27),
le banc d'essai de pneus (1) comportant une unité d'entraînement de pneu (15) qui, lorsque le pneu (27) est monté de manière rotative sur le porte-pneu (7), pouvant entraîner celui-ci dans une direction périphérique de pneu (Re).

2. Banc d'essai de pneus (1) selon la revendication précédente, au moins un des éléments d'entraînement linéaire (21) de l'ensemble hexapode (9) étant formé comme un vérin hydraulique.

3. Banc d'essai de pneus (1) selon la revendication 1, au moins un des éléments d'entraînement linéaire (21) de l'ensemble hexapode (9) étant formé comme un entraînement linéaire électromécanique.

4. Banc d'essai de pneus (1) selon l'une des revendications précédentes, le banc d'essai de pneus comportant une unité de ralentissement de pneu (17) qui peut alors, lorsque le pneu (27) est installé de manière rotative sur le porte-pneu (7), ralentir celui-ci dans une direction périphérique de pneu (Re).

5. Banc d'essai de pneus (1) selon l'une des revendications précédentes, le banc d'essai de pneus (1) comportant une unité d'entraînement de courroie (19) qui peut entraîner la courroie (11) dans une direction périphérique de courroie (Ri).

6. Banc d'essai de pneus (1) selon la revendication 5, l'unité d'entraînement de courroie (19) étant couplée à un galet de renvoi (13) des galets de renvoi (13) pour entraîner la courroie (11) par ledit galet de renvoi (13) dans la direction périphérique de courroie.
